Europäisches Patentamt

European Patent Office

Office européen des brevets

(19)

(11) Publication number: **0 077 654**
**A1**

(12) # EUROPEAN PATENT APPLICATION

(21) Application number: 82305483.8

(22) Date of filing: 14.10.82

(51) Int. Cl.³: **C 02 F 3/02**
**C 08 J 9/36**

(30) Priority: 21.10.81 GB 8131791

(43) Date of publication of application:
27.04.83 Bulletin 83/17

(84) Designated Contracting States:
AT BE CH DE FR IT LI LU NL SE

(71) Applicant: SIMON-HARTLEY LIMITED
Etruria Works
Stoke-on-Trent Staffordshire ST4 7BH(GB)

(72) Inventor: Austin, Eric Paul
77 Congleton Road
Sandbach Cheshire(GB)

(72) Inventor: Walker, Ian
60 King Street
Kidsgrove Staffordshire(GB)

(74) Representative: Ajello, Michael John
P.O. Box 25
Stockport Cheshire SK3 OXW(GB)

(54) A process and apparatus for promoting growth of biomass.

(57) A process and apparatus for promoting growth of biomass from a supply of suitable nutrient, for example, for the treatment of sewage or industrial effluent by the so-called activated sludge process. There is provided a tank (10) containing a filling consisting of a plurality of freely movable bodies (11) each formed as a block of reticular foamed material defining within its internal structure a substantial voidage which provides a protective environment to permit the growth of biomass, effluent to be treated being introduced into the tank via line (12), treated liquor leaving the tank via main (14), bodies (11) being removed continually or periodically by conveyor (21) and recycled to tank (10) after removal of accumulated biomass by mangle rolls (24).

FIG 1

## A PROCESS AND APPARATUS FOR PROMOTING GROWTH OF BIOMASS

THIS INVENTION relates to a process and apparatus for promoting growth of micro-organisms from a supply of suitable nutrient.

Examples of processes with which the invention is concerned and which are practised industrially are biological fermentation processes of various kinds and the treatment of sewage or industrial effluent by the so-called activated sludge process.

The present invention is based upon an appreciation of the possibility of providing micro-organisms, hereinafer referred to as "biomass" within a reaction vessel such that the volume of biomass present is accurately known and is present in packages of known size and form. In this way, the concentration of biomass can be sustained at an optimum level and the age of the biomass and therefore the overall yield from reactions, as well as the nature of those reactions themselves, can be determined and controlled.

According to the present invention there is provided a process for promoting growth of biomass comprising the steps of providing a vessel which contains a filling consisting of a plurality of freely movable bodies each having an internal structure defining therein a substantial voidage such as to provide therein a protective environment which will permit growth of micro-organisms, there being an extensive area of access from the external surface of each body to the voidage therewithin; and causing a nutrient material to enter said vessel thus to contact said filling; characterized in that each said body is a block of open-cellular material having a reticular structure such that substantially all of the individual spaces defined by the reticule lie in the region of 0.2mm to 2.5mm across and the spaces are all interconnected such that the biomass supported by the structure of each body is contained within the voidage thereof as an integral mass.

By "open-cellular material" we mean a material where no cell walls are present, but merely a filamentary reticule.

Growth of biomass outwardly from the outer surface of each said body is restricted by the relative movement of the bodies within the vessel. That is, any outward growth is immediately removed through attrition.

It is important that the bodies should be of such shape and size to cause them to move relative to one another in the vessel with a rubbing and/or knocking action without packing together as a solid unit. Furthermore, the outer surface of the bodies must be of such a character as to prevent them from interlocking one with another during such relative movement.

The invention will be further apparent from the following description with reference to the accompanying drawings which show one form of apparatus for the treatment of sewage effluent by the so-called activated sludge treatment process, and embodying the invention.

Of the drawings:-

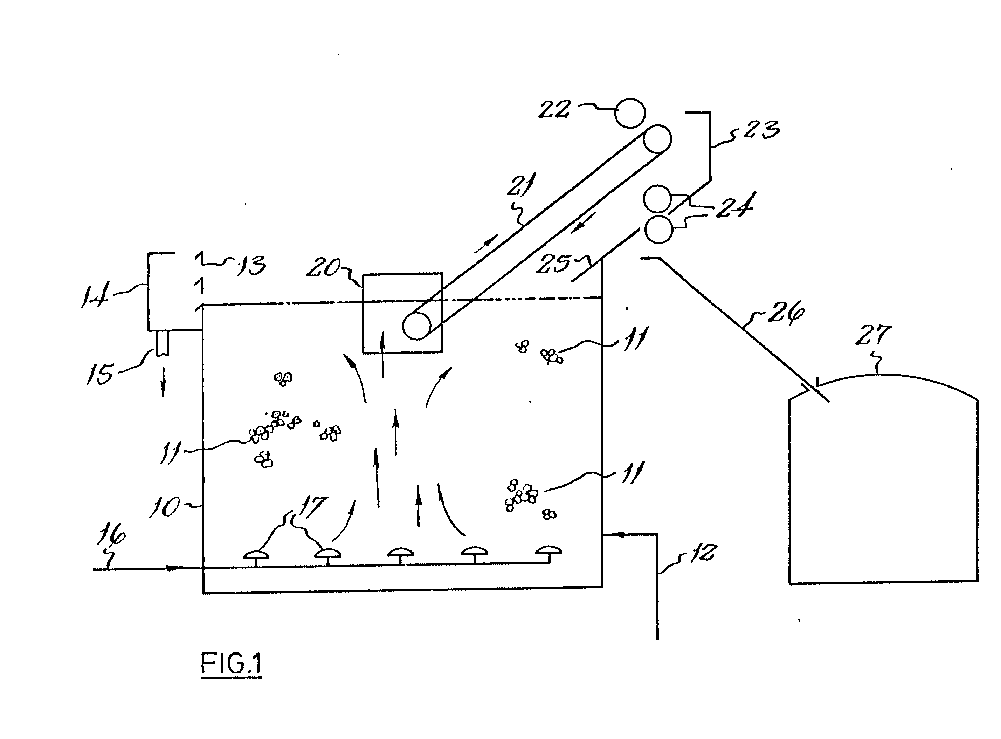

Fig. 1 shows a partially cut-away side elevation of the apparatus;

Fig. 2 shows a perspective view of one of the bodies;

and Fig. 3 is an enlarged view of the structural form of the material from which the bodies are produced.

In a conventional activated sludge treatment process, sewage or industrial effluent is aerated and agitated within a vessel in the presence of a biological population which metabolises on various impurities contained within the effluent and grows to produce so-called secondary sludge which can be removed from the effluent by sedimentation. The concentration of biological population within the treatment vessel will vary with changes in composition of effluent, residence time and numerous other factors, but will in any event be limited with a result that the treatment vessel will need to be much larger than would be necessary if higher concentrations of biological population could be sustained.

Referring now to the drawings it will be seen that the present apparatus is essentially comprised by a tank 10 forming a reaction vessel. The vessel is substantially filled with a multiplicity of bodies 11 whose structure will be described in greater detail hereinafter. Each of the bodies 11 however supports and contains biomass forming part of the total biological population contained within the tank 10. Effluent, in this case sewage effluent derived from raw sewage after screening and, if required, primary sedimentation thereof, is passed upwardly through the tank 10 by introduction through the line 12. Treated liquor leaves the upper end of the tank by passage through a perforated retaining screen 13 to overflow into a collecting main or gutter 14 to which is connected an outlet line 15.

Air is introduced into the base of the tank at line 16, via a plurality of air diffusers 17.

As the effluent and air flow upwardly through the tank 10 they react with the biological population supported and contained within the bodies 11 causing breakdown of various substances including carbonaceous and proteinaceous materials to produce carbon dioxide and additional biomass which tries to grow outwardly from the bodies 11.

The bed of bodies 11 do not pack the volume within the tank tightly whereby the flow of gas and liquid through the tank 10 causes some movement of the bodies relative to one another. This movement is such as to cause the outer surfaces of the bodies to rub and/or knock against one another, thus causing them to shed through attrition excess biomass before it builds up on the outer surfaces. Contact of the bodies with the walls of the tank and the flow of liquid over the bodies can also contribute to the release of excess biomass.

We have found that the concentration of biomass per unit volume of the reaction vessel utilising bodies of the kind with which we are here concerned can be greater by a factor of up to five than the concentration of biomass in a conventional aeration tank, with a result that the capacity of the treatment vessel for a given through flow of effluent can be approximately one fifth of that of the conventional vessel with a consequent and substantial reduction in the capital cost of a treatment plant, assuming equal biomass activity in both situations.

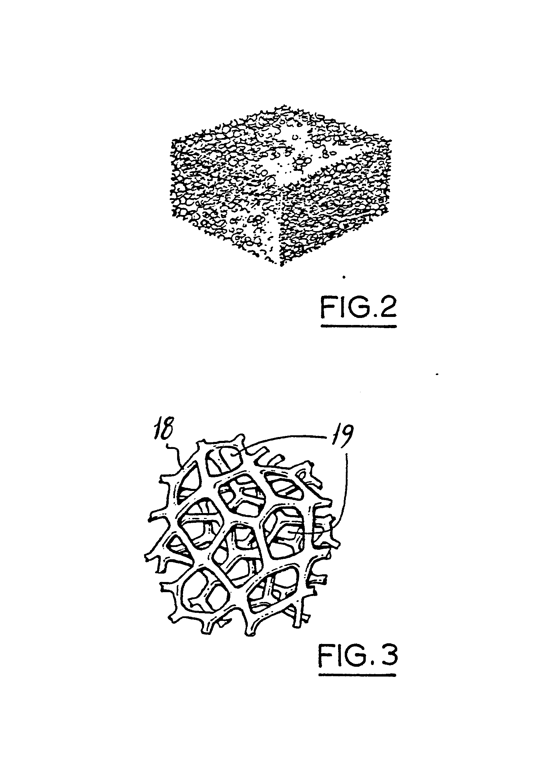

The bodies 11 are of a special construction. As shown in Fig. 2, their overall shape is preferably cuboid or the like so as to enable them to move relative to each other with a rubbing and/or knocking action without packing together as a solid unit. The bodies are preferably made from a synthetic foamed material such as polyurethane, of the open cell type wherein the walls of the cells have been removed to form a reticular structure 18 as illustrated in Fig. 3 where in excess of 90% of the bulk volume of the material is open space and the voids or cells 19 are all interconnected thus effectively forming one continuous void. Substantially all of the individual voids or cells 19 defined by the filaments of the .reticule should lie in the range of 0.2mm to 2.5mm across, and ideally between 0.6mm and 1.3mm across. Typically, the bodies will be cut from a sheet of such material of about 12.5mm thickness and each body will be approximately 25mm square. The material must be flexible and, in this example, fully resilient.

The filamentary characteristic of the material which is clearly seen from Fig. 3 will provide an extensive area of access from the outer surface of each body to the entire internal voidage thereof and the continuous voidage is such that the volume of biomass which will be supported and contained therein is generally present in each body as an integral mass or monolithic structure, the reticule serving as reinforcement therefor.

During operation, there is a tendency for bodies in the central region of the tank which are substantially filled with biomass, to pass upwardly to be captured in a collecting box 20, open at its top and bottom and having perforated side walls.

From the collecting box 20 the filled bodies are withdrawn from the tank by a conveyor belt 21 on which they pass under a first roller 22 which applies a gentle squeezing action to the bodies to release therefrom surplus clean water. Thereafter, the bodies leave the conveyor 21 and are directed by a chute 23 to the nip of a pair of mangle rolls 24 which squeeze substantially all of the biomass or sludge from the bodies, the bodies freed of biomass being redeposited into the tank by chute 25, whilst the removed sludge is delivered by a chute 26 into a holding tank 27 for subsequent disposal. The sludge contains approximately 6% solids by weight and can be maintained in a fresh condition in the tank 27 by any suitable means.

It will be thus understood that the bodies are continuously recycled through the tank 10. As the bodies circulate within the tank they gradually support and contain progressively more biomass, either becoming seeded with biomass contained within the liquor or being seeded by virtue of incomplete removal of biomass by the mangle rolls 24. The apparatus is designed so that the residence time of the bodies within the tank 10 is such that they are removed when they are substantially filled with biomass.

The flow of liquor and air through the tank 10 is such as to fluidise the bed of bodies 11 sufficiently to prevent the outward growth of biomass on the surfaces thereof,

The surplus recovered biomass or sludge will contain a smaller proportion of free water than conventional secondary sludges rendering dewatering to a combustible state more easy.

It will be understood that the quantity of biomass present in the reaction vessel at any time is reasonably accurately known as is the size and shape of the units or packages in which it is present and that control of the reaction can thus be more precise and predictable than has been possible hitherto with conventional systems.

Various interesting possibilities exist. For example, the bodies may be of such size that a sufficiently large volume of biomass is supported and contained whereby essentially aerobic processes take place at the surface of each body and within an internal layer adjacent such surface whilst essentially anaerobic processes such as the conversion of nitrate to nitrogen gas occur in the interior of the body in the deeper layers of biomass. It must be understood that the size of body necessary to ensure that both aerobic and anaerobic processes take place will be dependent upon the dissolved oxygen level within the reaction vessel. It follows that the size of the body can be selected for a given dissolved oxygen level or the dissolved oxygen level can be adjusted for a given body size to give the desired level of both aerobic and anaerobic processes.

Whilst the invention has been described with reference to the treatment of effluents, it will be understood that the techniques are applicable to any process wherein biological material is grown from a source of nutrient. Thus the techniques may be applied to the production of pharmaceutical substances and single cell proteins such as yeast. It is envisaged, for example, that fermenters used in the brewing and related industries might usefully contain the necessary yeast within bodies of the general kind described herein.

It will be understood that the bodies, even whilst empty, may serve to act as a filter in the apparatus, and in some applications such filtration effect might be advantageous.

Although, in the embodiment described, the bodies are resilient, and the surplus biomass is removed by squeezing, it is envisaged that other reticular materials, such as rigid or semi-rigid polymeric foams could be employed, and the bodies either destroyed along with their contents or emptied by some chemical or physical method. The bodies are recycled where possible to render the overall process cost-effective.

## CLAIMS

1.          A process for promoting growth of biomass comprising the steps of providing a vessel which contains a filling consisting of a plurality of freely movable bodies each having an internal structure defining therein a substantial voidage such as to provide therein a protective environment which will permit growth of biomass, there being an extensive area of access by way of a multiplicity of openings or cavities in the external surface of each body to the voidage therewithin; and causing a nutrient material to enter said vessel thus to contact said filling; characterised in that each said body is a block of open-cellular material having a reticular structure such that substantially all of the individual spaces defined by the reticule lie in the region of 0.2mm to 2.5mm across, and the spaces are interconnected such that the biomass supported by the structure of each body is contained within the voidage thereof as a substantially integral mass.

2.          A process according to Claim 1, wherein the bodies are caused to move within the vessel relative to one another sufficiently to restrict accumulation of biomass outwardly from the outer surfaces of the bodies.

3.        A process according to Claim 1 or Claim 2, wherein bodies are continually or periodically removed from the vessel when supporting and substantially filled with biomass, are freed or substantially freed of biomass, and are reintroduced into the vessel.

4.        A process according to any one of Claims 1 to 3, wherein the spaces defined by the reticule occupy in excess of 80% of the bulk unit volume of the material.

5.        A process according to any preceding claim, wherein the nutrient material is a sewage or industrial effluent.

6.        Apparatus for promoting growth of biomass, comprising a vessel containing a filling consisting of a plurality of freely movable bodies each having an internal structure defining therein a substantial voidage such as to provide therein a protective environment which will permit growth of biomass, there being an extensive area of access by way of a multiplicity of openings or cavities in the external surface of each body, to the voidage therewithin; and means for causing a nutrient material to enter said vessel thus to contact said filling; characterised in that each said body is a block of open-cellular material having a reticular structure such that substantially all of the individual spaces defined by the reticule lie in the region of 0.2mm to 2.5mm across, and the spaces are interconnected such that the biomass supported by the structure of each body is contained within the voidage thereof as a substantially integral mass.

7.       Apparatus according to Claim 6, wherein the filling is provided in the vessel such that the bodies can move relative to one another in the operation of the process with a knocking or rubbing action but without interlocking one with another, whereby accumulation of biomass outwardly from the outer surface of the or each body is restricted.

8.       Apparatus according to Claim 6 or Claim 7, including means for continually or periodically removing bodies from the vessel, means for extracting biomass from said removed bodies, and means for reintroducing said bodies freed of biomass into the vessel.

9.       Apparatus according to any one of the preceding claims, including means for introducing air into the base of the vessel to cause the bodies filled or substantially filled with biomass to rise within the vessel, a collecting box being positioned in said vessel to receive said rising bodies, means for elevating said bodies from said collecting box, means for removing the biomass from the elevated bodies, and means for returning the bodies freed of biomass, into the vessel, further means being provided for recovering treated liquor from an upper region of the vessel.

10.      A body for use in the process of Claim 1, comprising a block of open-cellular material having a reticular structure such that substantially all of the individual spaces defined by the reticule lie in the region of 0.2mm to 2.5mm across, and the spaces are interconnected such that the biomass supported by the structure of each body is contained within the voidage thereof as a substantially integral mass.

11.      A body according to Claim 10, wherein the spaces defined by the reticule occupy in excess of 80% of the bulk unit volume of the material.

12.      A body according to Claim 10 or Claim 11, whose overall shape is cuboid or the like so as to enable a plurality of them to move relative to each other with a rubbing and/or knocking action without packing together as a solid unit.

0077654

13.    A body according to any one of Claims 10 to 12, wherein the filaments of said reticule lie in the range of 0.2mm to 2.5mm across.

14.    A body according to any one of Claims 10 to 13, having a thickness in the region of 12mm and a peripheral dimension in the region of 25mm x 25mm.

FIG.1

FIG.2

FIG.3

European Patent Office

**EUROPEAN SEARCH REPORT**

## DOCUMENTS CONSIDERED TO BE RELEVANT

EP 82305483.8

| Category | Citation of document with indication where appropriate, of relevant passages | Relevant to claim | CLASSIFICATION OF THE APPLICATION (Int. Cl. 3) |
|---|---|---|---|
| X | <u>GB - A - 360 272</u> (SCHIMRIGK)<br><br>* Claim; page 1, lines 60-75; page 2, lines 65-84; fig.1,2 *<br><br>-- | 1,2,5-7, 9,10 | C 02 F 3/02<br><br>C 08 J 9/36 |
| X | <u>GB - A - 2 006 181</u> (MANCHESTER INSTITUTE)<br><br>* Claims 1,2; page 1, line 106 – page 2, line 37; page 2, line 70; fig. 1-4 *<br><br>-- | 1-3,5-10 | |
| A | <u>GB - A - 1 247 609</u> (FMC)<br><br>* page 3, line 114 – page 4, line 4; fig. 2,3 *<br><br>---- | 10 | |

TECHNICAL FIELDS SEARCHED (Int. Cl. 3)

C 02 F

C 08 J 9/00

The present search report has been drawn up for all claims

| Place of search | Date of completion of the search | Examiner |
|---|---|---|
| VIENNA | 16-12-1982 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document